# EUROPEAN PATENT SPECIFICATION

(11) **EP 0 787 413 B1**
(45) Date of publication and mention of the grant of the patent: **01.12.2004**
(21) Application number: 95921104.6
(22) Date of filing: 27.06.1995
(51) Int. Cl.: H04Q 7/32, H04Q 7/22

(54) **NETWORK INTERCONNECTING SYSTEM**
NETZWERKVERBINDUNGSSYSTEM
SYSTEME D'INTERCONNEXION DE RESEAU

(43) Date of publication of application: 06.08.1997
(73) Proprietor: Koninklijke Philips Electronics N.V., 5621 BA Eindhoven (NL); PHILIPS NORDEN AB, 164 85 Stockholm (SE)
(72) Inventor: DEMERY, David, Andrew, N-5621 BA Eindhoven (NL); ZIJDERHAND, Frans, N-5656 AA Eindhoven (NL); MULDER, Edwin, Wijnand, N-5611 HL Eindhoven (NL)
(74) Representative: Peters, Rudolf Johannes
(86) International application number: PCT/IB1995/000522
(87) International publication number: WO 1997/001940

(56) References cited:
- EP-A- 0 300 350
- EP-A- 0 663 746

## Description

### FIELD OF THE INVENTION

The invention relates to a communication system for use with one or more stationary first entities and multiple second entities via a primary wireless intermediate network. In many usages, the second entities are mobile, for example as wheeled vehicles. In other applications, the second entities are stationary, or even more or less permanent. In general, stationary entities can be managed more easily than mobile entities, as far as the communication facilities go. A particular, non-limitative embodiment for such wireless intermediate network is a cellular radio network. Such networks have already found widespread use in telephone communication, in particular for usage with vehicle-located telephone sets. Moreover, combined usage of such cellular communication with an in-vehicle network with one or more stations, and also with networking at the stationary side of the cellular system would represent an advantageous extension on various levels of use.

### SUMMARY TO THE INVENTION

Now, various advantageous features would be the following:
to allow for interconnection between any combination of fixed and mobile networks for both connection-oriented and connectionless service. In a connection-oriented service, first a connecting link is established between two applicable stations, before the actual information transfer can be effected. In a connectionless service, this establishing is foregone, and the information transfer is undertaken immediately. Both schemes have their advantages; the establishing of the link will require some overhead, but once the link has been established, the overall transfer has a higher efficiency.
to allow entities to be addressed on an individual, group, generic, or geographic-area basis;
to allow standard features such as Quality of Service (QoS) parameters to be included in the transfer, either jointly or individually, such as Priority Level, Reliability Level, Delay Requirement.
to allow for the inclusion of "lifetime information", so that messages are deleted automatically when they are considered no longer valid, such as messages that are used in repeated broadcast applications and store-and-forward messaging.

In consequence, amongst other things it is an object of the present invention to provide a communication system according to the preamble, that in a consistent manner transfers data across separate networks, that may be disparate or not. An important restriction is that the traffic on the wireless network should be restricted in volume, as especially this traject has limited transfer capability at relatively high cost. Now, according to one of its aspects, the invention is characterized according to the characterizing part of claim 1. The first entities are generally applications, all of the various networks may be organizationally different on any of the various protocol layers, but through the invention the movement of data through the communication system is handled in a consistent manner.

Advantageously, the system accommodates at least one of an individual destination address, a group destination address, and a generic destination address. A useful convention is that an address can consist of letters, digits, or any combination thereof. A group (destination) address means that a plurality of respective destinations may be reached through using a single address. A particular embodiment is that the group can include all destinations. According to generic addressing, a common address formulation describes a particular destination, without the source of the address having to know the physical address of the destination. On the other hand, a geographic area address means that the information is intended for distribution over a specific area of the intermediate network that is described in a suitable way without the source of the message having to know the identity of the effectively reached destination.

Advantageously, the system comprises at least one control gateway being arranged for setting up a broadcast communication link with one or more intended target entities. This means that it is considered superfluous to ascertain the presence and receptivity of any addressee that may be addressed as part of a prespecified group.

Advantageously, the system comprises at least one gateway device being arranged for under control of a received request, enabling the setting up in association to that request, of a connectionless service to one or more intended target entities. According to this form of communication, all addressing information and user data are sent together with no fired communication link between end users in place. By itself, such type of link has been used in a different environment, to wit, so-called E-mail, where intermediate networks are considered irrelevant: the physical link is established simultaneously with the data transfer. The present invention however, in an environment where the positioning of the destination stations may change in an extremely dynamic and fast manner, advantageously expresses the request for a connectionless service in an explicit manner.

Advantageously, the system comprises at least one gateway device being arranged for under control of a received request, enabling the setting up in association to that request, of a connection-oriented service to one or more intended target entities. According to this form of communication, first the physical link between the two entities is established. Subsequently the transfer proper is effected. For particular categories of communication, the connection-oriented service may be particularly advantageous or even mandatory, in view of transfer efficiency or other considerations.

The invention also relates to a gateway device for use in a system according to the above, and to a vehicle comprising such gateway device connected to an in-vehicle local area network for use in such system. Various further advantageous aspects are recited in dependent Claims.

### BRIEF DESCRIPTION OF THE DRAWING

These and other features and advantages of the invention will be further described hereinafter with reference to the disclosure of preferred embodiments, and in particular in and by the appended Figures that show:
Figure 1 an overall diagram of applying the system;
Figure 2 an overall view of a network architecture;
Figure 3 a multilayer interaction diagram of the invention;
Figure 4 an exemplary header format.

### DESCRIPTION OF PREFERRED EMBODIMENTS

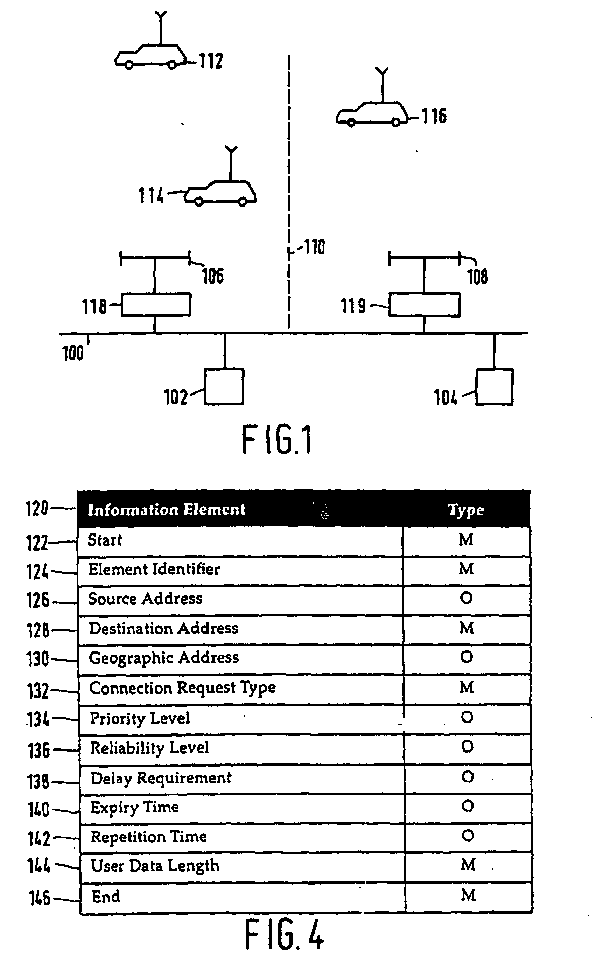

Figure 1 shows a simplified overall diagram of applying the system. Line 100 symbolizes a wide area communications network. Blocks 102, 104 are so-called applications or services that will be considered more in detail hereinafter. Network 100 interfaces to a cellular radio system by means of gateway devices 118, 119 and associated antennae 106, 108, which together with other operational parameters such as transmitting power defines a cell of the cellular broadcast network. The separation between the cells has been symbolized by line 110. In fact, the separation may be diffuse. However, the invention is not limited to usage with a cellular network, inasmuch as the division may be on another level rather than according to geographical regions, such as according to frequency range. Items 112, 114, 116 are mobile entities such as motor vehicles that each are provided with an antenna that via an internal gateway, not shown, interfaces to an internal communication network. Two networks that are coupled via an intermediate gateway must be allowed to be disparate, that is, they may be completely different and also, are completely separate. In particular, a network at one side of a gateway need have no knowledge of the network at the other side. In particular, the in-vehicle network should not need standardization as seen from the wireless network. In practice, the situation is much more complicated, because of the larger geographic area, the larger number of stationary and mobile entities, and the concatenation of networks in a more extended sequence.

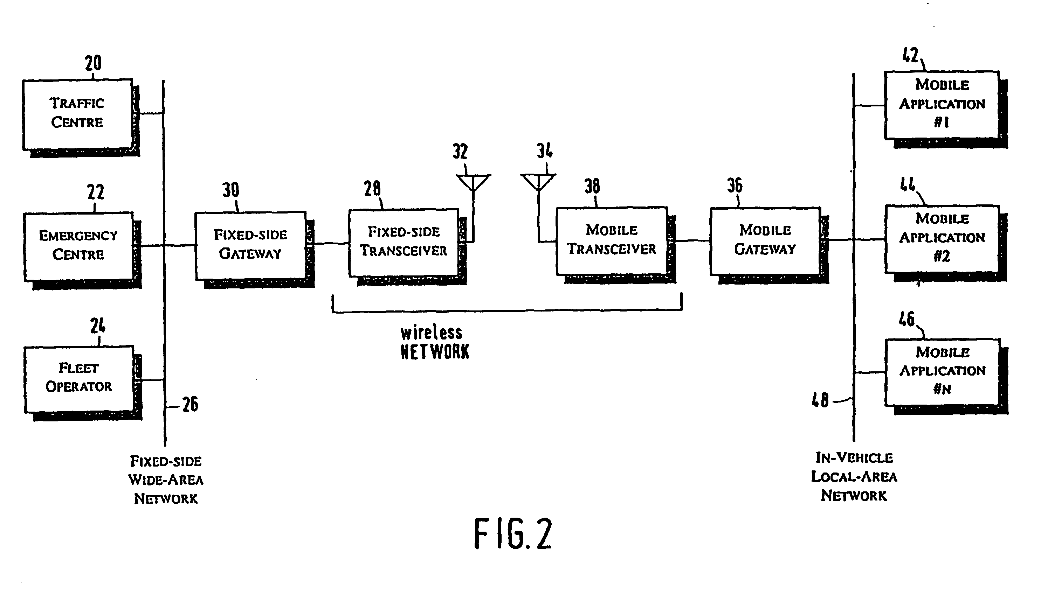

Figure 2 is an overall view of a multi-network architecture for use in the present invention. At the left hand side is a fixed-side wide-area network 26. Three stations are, by way of example, a traffic centre 20 that operates to communicate various types of information to the vehicles, such as weather forecasts, road and traffic condition data indicating traffic jams, roadworks in progress, icy road surface, and other, emergency centre 22 that receives emergency calls from vehicles and may address particular subcategories such as police or firefighting vehicles, and fleet operator 24 that interfaces to particular vehicles for controlling effectual routing thereof, rendez-vous, and other particular operations. These various applications are mapped on appropriate hardware, which has not been detailed hereinafter, as being outside the scope proper of the invention. Similar mappings apply to the gateway devices, to the applications at right, and to the transceiver devices. Block 30 is a fixed-side gateway device that interfaces to network 26. Block 28 symbolizes a fixed-side transceiver that connects to antenna 32. Examples of network 26 are a Wide Area Network, Ethernet, PSTN, and PSPDN; by themselves, such networks are not part of the present invention. Antennas 32, 34 as shown support a cellular radio network that by means of judiciously chosen frequencies, broadcast range, and antenna distribution divides a large terrestrial region into effectively separated compartments. By themselves, cellular mobile networks are well known. In other environments the central wireless network does not rely on cellular radio, but on another technology: inter alia, also infrared transmission would be applicable. Block 38 is a mobile transceiver that interfaces to antenna 34. Block 36 is a mobile gateway device that interfaces to an in-vehicle local area network 48 that has in-vehicle applications 42, 44, 46 which are separately accessible. Now, the vehicle generally receives a stream of data elements that are linked in a sequence and which are used for various purposes, each data element possibly representing such a different application.

A first such exemplary application is a navigating centre that determines an optimum route under driver-indication of an intended destination, as based on actual position of the vehicle, road and traffic conditions, sensing of actual vehicle displacement, and map data from a large data base.

A second such exemplary application communicates with the vehicle specific information considered relevant, such as available parking space and public transport information to the vehicle, emergency calls from the vehicle, and various others that depend on actual location and possibly on various situational parameters of the vehicle.

A third such exemplary application receives broadcast messages of general interest that may be communicated to the driver person subject to particular conditions such as the category of the vehicle, the particular condition the vehicle is in (stopped, cruising, travelling or responding to emergency), or certain wishes expressed by the driver. The above is only a selection of a much larger range of feasible realizations. The in-vehicle network may be of known definition, such as for example described in EP Application 514,972, to the same assignee as the present application.

Connection between a first network and a second network may generally be done via router or gateway devices. A router carries out low-level directing of a data stream, wherein the destination may be reformatted, for example because the limited address range within a single network, and the message is redirected to the next router or station. However, most other parameters of the message on its various OSI levels are maintained. On the other hand, a gateway device may usually undertake protocol conversion, such as the mapping of a format used in the first protocol to a different format appropriate in the second protocol. For example, protocol X.25 has X.121 numbering, whereas IEEE 802 LAN has 48-bit numbering. A gateway device may also change the transmission rate so that the data can be carried correctly by the new transit network.

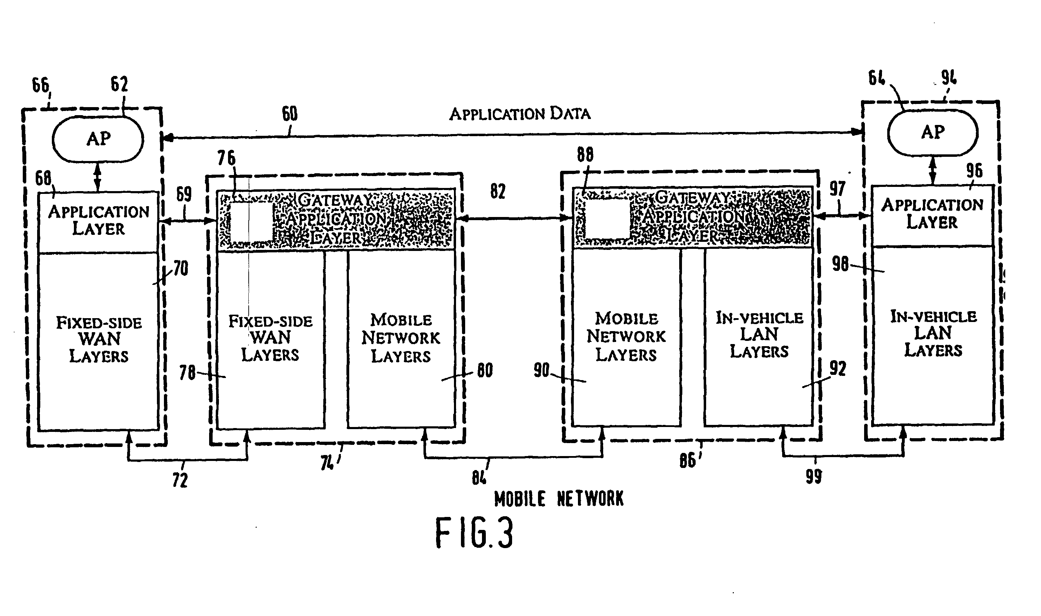

Figure 3 shows a multilayer interaction diagram or layering model of the invention. On a high level, two application processes, 62 at the stationary side, and 64 at the mobile side, exchange application data on a link 60. On the next lower level, there is an application layer according to its definition according to the OSI conventions. Here, process 62 in its station 66 has its application layer 68 that translates via link 69 to gateway application layer 76 in the gateway device 74 on the stationary side. The central part of the present invention relates to the gateway devices on the level of their respective application layers. Each gateway device correctly constitutes an operational station in the interfaced network. Application layer translates via link 82 to the application layer 88 in the gateway device 86 on the mobile side. Via link 97 this is furthermore to the application layer 96 in the mobile application 94. Generally, each lower layer adds formatting and other defining information to the information provided by the next higher layer. In particular, in blocks 76, 88, the essential elements of the invention are practised. If applicable, the number of sequenced blocks can be extended in either direction.

On the next lower level, the particularities of the respective network protocols are practised. At far left, block 70 contains the WAN (Wide Area Network) protocol part of the fixed or stationary side. Via link 72, the data is transferred to block 78, that contains the counterpart protocol to part 70. Gateway device 74 converts this protocol to the mobile network layers in block 80. Transfer on line 60 has the transfer on lines 69, 72, 82, 84, 97, 99 implicit. Transfer on line 69 has the transfer on line 72 implicit. Transfer on line 82 has the transfer on line 84 implicit. In particular, line 84 may represent a mobile network, such as a GSM, Mobitex, or other network that by itself is wellknown. Transfer on line 97 has the transfer on line 99 implicit. Block 90 is the counterpart of block 80 in gateway device 72. The protocol is next transformed to the protocol of the in-vehicle local area network LAN in block 92. Via link 99 this communicates with the in-vehicle LAN layers 98 of block 94.

Figure 4 shows an exemplary header format for a message. For simplicity, the lengths in bits of the various parts have not been indicated. There are two categories of parts, the first is generally mandatory (M), the second is generally optional (O). Of course, for a particular situation or purpose, a particular O-type information may in fact be mandatory. The list is non-restrictive. Of course, the sequence of the parts may be changed, whereas other categories of information may be added to the header as well. The information categories shown allow for an explicit and complete definition of what the originator station or application wished to communicate. In being transformed by a gateway device, the relevant information categories of the header are maintained for retaining the optimum control facility offered by the header format shown.

Now, the first line 120 indicates the various categories and their types. The sequence of the header parts is generally according to the sequence of the lines in the Figure, although certain deviations may be useful as well. Line 122 indicates the start of the header. This being no functional element on the level of the header's meaning, the next gateway may decide to reformat. The same applies to line 146 that indicates the end of the header. Line 124 is an element identifier that signifies the category and/or the name of the message, for easier referral. Line 126 is the source address that may for example identify traffic centre 20. Line 128 is the destination address, that may for example identify application 42. Note that the information may flow in the opposite direction as well, or be bidirectional. Line 130 represents a geographic address, such as that identifies a particular geometric shape. On the next lower level it may then be translated to identify one or more broadcast cells. The addresses may be chosen from a prespecified directory. Line 132 indicates the connection request type, that may indicate broadcast, connectionless, connection-oriented, or other. This information is mandatory, because to a large degree it controls the various activities in the overall communication system. Line 134 indicates a priority level, such as definable in a range of two bits. This is the first part of the Quality of Service (QoS) parameters that represent the effective service offered. If priority is high it may overtake earlier queued messages of lower priority. Line 136 indicates a reliability level that may have various levels, and that may determine the associated parameters of the actual transfer. Low reliability may mean single transmittal, without additional protective measures; this may give failure in a few percent of the cases. Average reliability may mean single transmittal with addition of a check sum of for example 32 bits, and repeat upon detection of an error: this may restrict failure to less than 1% of all transmissions. High reliability may mean usage of forward error correction that adds redundancy to the message, addition of larger check sums, repeated transmission with the check sum in a different message, and other features. This may lower the failure rate to much less than 1%. Line 138 may give the longest allowable delay for transmission. Upon nearing the maximum of the allowable delay, the priority could temporarily be raised. The delay value may be in the range of minutes for a general information. In a critical situation this may be much less, such as in the range of 0.01 to 0.1 second for traffic signalizations in a railroad environment. Line 140 gives the expiry time. This indication is relevant if a message is sent repeatedly, but its relevance is considered over after some specified time, such as in the case of a weather forecast. The expiry time may be chosen from a particular prespecified repertory. Line 142 gives the repetition time, for example that a particular dangerous situation must be communicated every two minutes, whereas another item could require transmission only once every ten minutes. Line 144 indicates the user data length, for example in bytes. The message itself generally follows the header, but for simplicity no further detailing thereof has been done.

Now, in operation the following steps will be followed. First the origin station, such as fleet centre 24 sets the end destination identifier, and directs header plus data towards fixed-side gateway device 30. Next, gateway device 30 checks the end destination against its routing tables, and directs the data to the mobile gateway device, possibly undertaking any necessary protocol conversion. Mobile gateway device 36 now checks the end destination against its routing tables and converts the protocol if required.

Now, if the end address is a group address, the fixed-side gateway device for connection-oriented communication must set up links to each member of the group. If the information is directed to all mobiles in a given geographic area, the fixed-side gateway device must distribute the information over all radio cells that cover the area. Then the end destination is 'all mobiles'. If a roaming vehicle wants to contact a particular utility (left hand column in Figure 2), it uses a generic address. This means that the mobile does not know the name or number of the utility itself (the instance thereof that would be relevant in the cell or region), but it merely uses the generic number or name. The fixed-side gateway device, by means of address translation then makes the connection to the nearest appropriate utility. Encapsulation of the destination address within a header and the systematic usage of routing tables within network gateways allow to distribute information over a wide range of separate and possibly, disparate networks. The various extras allow for great flexibility.

## Claims

1. A communication system for use with one or more stationary first entities and multiple second entities via a primary wireless intermediate network,
said system being **characterized in that** each said first and second entities comprises a respective secondary network that is separate from said primary network, each secondary network being interfaced to the primary network through a gateway device that is arranged for transferring a received message comprising a message header and a message body, under protocol conversion inclusive of message header interpretation, which conversion maintains unchanged in the header a predetermined subset of header items of a set that comprises Source Address, Geographic Address, Priority Level, Reliability Level, Delay requirement, Expiry time, and Repetition time, and said system having control means reactive to one or more unchanged items of said subset for therethrough controlling selective addressing of a destination, link operation, or message presentation to the destination.

2. A communication system as claimed in Claim 1, and being arranged for allowing in said second entities a multistation network.

3. A communication system as claimed in Claims 1 or 2, and accommodating at least one of an individual destination address, a group destination address, and a generic destination address.

4. A communication system as claimed in Claims 1, 2 or 3, and comprising at least one control gateway being arranged for setting up a broadcast communication link with one or more intended target entities.

5. A communication system as claimed in any of Claims 1 to 4, and comprising at least one gateway device being arranged for, under control of a received request, enabling the setting up, in association to that request, of a connectionless service to one or more intended target entities.

6. A communication system as claimed in any of Claims 1 to 4, and comprising at least one gateway device being arranged for, under control of a received request, enabling the setting up, in association to that request, of a connection-oriented service to one or more intended target entities.

7. A gateway device for use in a system as claimed in any of Claims 1 to 6 for interconnecting two or more networks that are disparate with respect to each other and being arranged for transferring a message while executing protocol conversion under interpretation of a message header wherein said conversion maintains in the header at least a predetermined subset of header contents of a set comprising Source Address, Geographic Address, Priority Level, Reliability Level, Delay Requirement, Expiry Time, and Repetition Time.

8. A vehicle containing a gateway device as claimed in Claim 7 interfaced to an in-vehicle network having at least one station arranged to one of the following tasks: a navigating task, an information providing task, an information gathering task, and a vehicle control task.

## Patentansprüche

1. Kommunikationssystem zur Anwendung bei einer oder mehreren stationären Entitäten und mehreren zweiten Entitäten über ein primäres drahtloses Zwischennetzwerk, wobei das genannte System **dadurch gekennzeichnet ist, dass** jede genannte erste und zweite Entität ein betreffendes sekundäres Netzwerk aufweist, das zu dem genannten primären Netzwerk separat ist, wobei jedes sekundäre Netzwerk über eine Durchgangsanordnung mit dem primären Netzwerk gekoppelt ist, wobei diese Durchgangsanordnung zur Übertragung einer empfangenen Nachricht mit einem Nachrichtenkopf und einem Nachrichtenkörper vorgesehen ist, und zwar unter Protokollkonversion einschließlich der Nachrichtenkopfinterpretation, wobei diese Konversion in dem Kopf ungeändert einen vorbestimmten Subsatz von Kopfitems eines Satzes beibehält, der Folgendes umfasst: Quellenadresse, geographische Adresse, Prioritätspegel, Zuverlässigkeitspegel, Verzögerungsanforderung, Fälligkeit und Wiederholungszeit, und wobei das genannte System Steuermittel aufweist, die auf ein oder mehrere ungeänderte Items des genannten Subsatzes reagieren um dadurch selektive Adressierung eines Ziels, Kopplungsvorgänge, oder Nachrichtenpräsentation zu der Bestimmung zu steuern.

2. Kommunikationssystem nach Anspruch 1, vorgesehen um in den genannten zweiten Entitäten ein Netzwerk mit mehreren Stationen zu ermöglichen.

3. Kommunikationssystem nach Anspruch 1 oder 2, zum Unterbringen wenigstens einer Adresse von einer einzelnen Zieladresse, einer Gruppenzieladresse, und einer auswählbaren Zieladresse.

4. Kommunikationssystem nach Anspruch 1, 2 oder 3, mit wenigstens einer Steuerüberleitungsanordnung, die vorgesehen ist zum Aufbauen einer Funkkommunikationsverbindung mit einer oder mehreren Zielentitäten.

5. Kommunikationssystem nach einem der Ansprüche 1 bis 4, mit wenigstens einer Überleitungsanordnung, vorgesehen um unter Ansteuerung eines empfangenen Antrags den Aufsatz eines verbindungslosen Dienstes mit einer oder mehreren beabsichtigten Entitäten zu ermöglichen, dies in Zusammenarbeit mit diesem Antrag.

6. Kommunikationssystem nach einem der Ansprüche 1 bis 4, mit wenigstens einer Überleitungsanordnung, vorgesehen um unter Ansteuerung eines empfangenen Antrags den Aufsatz eines verbindungsorientierten Dienstes zu einer oder mehreren beabsichtigten Entitäten zu ermöglichen, dies in Zusammenarbeit mit diesem Antrag.

7. Überleitungsanordnung zur Verwendung in einem System nach Anspruch 1 bis 6, zur Verbindung zweier oder mehrerer Netzwerke, die zueinander ungleichartig sind und vorgesehen zum Übertragen einer Nachricht, indem Protokollkonversion durchgeführt wird, und zwar unter Interpretation eines Nachrichtenkopfes, in dem die genannte Konversion in dem Kopf wenigstens einen vorbestimmten Subsatz von Kopfinhalt eines Satzes beibehält, wobei dieser Satz Quellenadresse, geographische Adresse, Prioritätspegel, Zuverlässigkeitspegel, Verzögerungsanforderung, Fälligkeit und Wiederholungszeit enthält.

8. Fahrzeug mit einer Durchgangsanordnung nach Anspruch 7, gekoppelt an ein Fahrzeug-eigenes Netzwerk mit wenigstens einer Station, vorgesehen fiir eine der nachfolgenden Aufgaben: eine Navigationsaufgabe, eine Informationserteilungsaufgabe, eine Informationssammelaufgabe und eine Fahrzeugsteueraufgabe.

## Revendications

1. Système de communication destiné à être utilisé avec une ou plusieurs premières entités stationnaires et de multiples secondes entités via un réseau intermédiaire sans fil principal,
ledit système étant **caractérisé en ce que** chacune desdites premières et secondes entités comprend un réseau secondaire respectif qui est séparé dudit réseau principal, chaque réseau secondaire étant interfacé avec le réseau principal par l'intermédiaire d'un dispositif passerelle qui est conçu pour transférer un message reçu comprenant un en-tête de message et un corps de message, avec une conversion de protocole incluant une interprétation de l'en-tête du message, laquelle conversion maintient inchangé dans l'en-tête un sous-ensemble prédéterminé d'éléments d'en-tête d'un ensemble qui comprend l'Adresse Source, l'Adresse Géographique, le Niveau de Priorité, le Niveau de Fiabilité, l'Exigence de Retard, le Temps d'Expiration et le Temps de Répétition, ledit système ayant des moyens de commande réagissant à un ou plusieurs éléments inchangés dudit sous-ensemble pour commander de ce fait l'adressage sélectif d'une destination, d'une opération de liaison, ou d'une présentation d'un message à la destination.

2. Système de communication selon la revendication 1, **caractérisé en ce qu'**il est conçu pour admettre dans lesdites secondes entités un réseau multistation.

3. Système de communication selon la revendication 1 ou 2, **caractérisé en ce qu'**il prend en charge au moins l'une d'une adresse de destination individuelle, d'une adresse de destination groupée, et d'une adresse de destination générique.

4. Système de communication selon la revendication 1, 2 ou 3, **caractérisé en ce qu'**il comprend au moins une passerelle de commande qui est conçue pour établir une liaison de communication de diffusion avec une ou plusieurs entités cibles voulues.

5. Système de communication selon l'une quelconque des revendications 1 à 4, **caractérisé en ce qu'**il comprend au moins un dispositif passerelle qui est conçu pour permettre, sous le contrôle d'une demande reçue, l'établissement d'un service sans connexion, en association avec cette demande, à destination d'une ou plusieurs entités cibles voulues.

6. Système de communication selon l'une quelconque des revendications 1 à 4, **caractérisé en ce qu'**il comprend au moins un dispositif passerelle qui est conçu pour permettre, sous le contrôle d'une demande reçue, l'établissement d'un service orienté connexion, en association avec cette demande, à destination d'une ou plusieurs entités cibles voulues.

7. Dispositif passerelle destiné à être utilisé dans un système selon l'une quelconque des revendications 1 à 6, pour interconnecter deux ou plusieurs réseaux qui sont disparates l'un par rapport à l'autre et qui sont conçus pour transférer un message tout en exécutant une conversion de protocole par interprétation de l'en-tête d'un message, dans lequel ladite conversion conserve dans l'en-tête au moins un sous-ensemble prédéterminé de contenus d'en-tête formés d'un ensemble comprenant une Adresse Source, une Adresse Géographique, un Niveau de Priorité, un Niveau de Fiabilité, une Exigence de Retard, un Temps d'Expiration et un Temps de Répétition.

8. Véhicule contenant un dispositif passerelle selon la revendication 7, interfacé avec un réseau embarqué ayant au moins une station conçue pour effectuer l'une des tâches suivantes : une tâche de navigation, une tâche de fourniture d'informations, une tâche de collecte d'informations et une tâche de commande du véhicule.
